# NEUE EUROPÄISCHE PATENTSCHRIFT

(11) **EP 0 553 684 B2**
(45) Veröffentlichungstag und Bekanntmachung des Hinweises auf die Entscheidung über den Einspruch: **21.12.2005**
(45) Hinweis auf die Patenterteilung: 21.08.1996
(21) Anmeldenummer: 93100703.3
(22) Anmeldetag: 19.01.1993
(51) Int. Cl.: B05B 15/12, B01D 61/14

(54) **Rückgewinnungsanlagen für Wasserlacküberschuss**
Recovery apparatus for excess of water-based paint
Installation de récupération d'excédent de peinture à base aqueuse

(30) Priorität: 30.01.1992 DE 4202539
(43) Veröffentlichungstag der Anmeldung: 04.08.1993
(73) Patentinhaber: Dürr Systems GmbH, 70435 Stuttgart (DE)
(72) Erfinder: Bhatnagar, Satpal, W-7143 Vaihingen/Rossw. (DE); Frey, Hans-Ulrich, W-7012 Fellbach (DE); Weschke, Jürgen, W-7252 Weil der Stadt (DE)
(74) Vertreter: Hoeger, Stellrecht & Partner Patentanwälte

(56) Entgegenhaltungen:
- DE-A- 2 510 309
- FR-A- 2 284 356
- US-A- 4 818 388
- US-A- 5 062 963
- Zeitschrift JOT, Heft 12, Dez. 1985, S.19-20

## Beschreibung

Die Erfindung betrifft eine Rückgewinnungsanlage für Lacküberschuß in Lackspritzkabinen, umfassend einen Kabinenumwälzwasserkreislauf, insbesondere mit einem Systemtank zum Sammeln des Kabinenumwälzwassers, eine Vorkonzentrierungsstufe, zu welcher von dem Kabinenumwälzwasserkreislauf über eine Abzweigleitung ein Volumenstrom von Kabinenumwälzwasser zu einer Vorkonzentrierungsstufe fließt, daß die Vorkonzentrierungsstufe einen Ringkreislauf mit einer Ultrafiltrationseinheit aufweist, welche ständig im Ringkreislauf ein Vorkonzentrat und ein den Ringkreislauf verlassendes Permeat erzeugt, welches dem Kabinenumwälzwasserkreislauf zufließt.

Darüber hinaus betrifft die Erfindung noch ein Verfahren zur Rückgewinnung von Lacküberschuß in Lackspritzkabinen, in welchen Kabinenumwälzwasser im Kreislauf geführt ist und insbesondere in einem Systemtank gesammelt wird, wobei von dem Kabinenumwälzwasserkreislauf ein Volumenstrom von Kabinenumwälzwasser zu einer Vorkonzentrierungsstufe geführt wird, die Vorkonzentrierungsstufe einen Ringkreislauf mit einer Ultrafiltrationseinheit aufweist, in welcher ständig im Ringkreislauf ein Vorkonzentrat und ein den Ringkreislauf verlassendes Permeat erzeugt wird, und wobei das Permeat dem Kabinenumwälzwasser zugeführt wird.

Aus der FR-A-2 284 356 sind eine eingangs beschriebene Rückgewinnungsanlage für Lacküberschuß und ein Verfahren hierzu bekannt, diese betreffen jedoch nicht die Rückgewinnung von Lacküberschuß beim Spritzlackieren Wasserlacken und sind daher auch nicht für das Wasserlack-Recycling geeignet.

Es ist ferner bekannt, bei Lackspritzkabinen mittels des Kabinenumwälzwassers den Wasserlacküberschuß aufzufangen und dadurch aus der Lackspritzkabine auszuwaschen. Durch dieses Auswaschen des Wasserlacküberschusses steigt der Festkörperanteil in dem Kabinenumwälzwasserkreislauf stetig an. Ab einer bestimmten Konzentration des Festkörperanteils in dem Kabinenumwälzwasserkreislauf reicht die Umwälzung nicht mehr aus, um die Festkörperanteile, d.h. die Wasserlackpartikel, in der Schwebe zu halten, so daß ein Sedimentieren der Festkörperanteile in kritischen Teilen des Kabinenumwälzwasserkreislaufs einsetzt. Damit kann die Auswaschung des Wasserlacküberschusses in der Lackspritzkabine nicht mehr sinnvoll aufrechterhalten werden und es treten eine Vielzahl von Problemen aufgrund der sedimentierten Wasserlackpartikel auf.

Der Erfindung liegt daher die Aufgabe zugrunde, eine Rückgewinnungsanlage für Wasserlacküberschuß in Lackspritzkabinen zu schaffen, bei welcher Probleme mit sedimentierenden Wasserlackpartikeln nicht mehr auftreten und welche außerdem ein Wasserfack-Recycling ermöglichen.

Diese Aufgabe wird durch eine Rückgewinnungsanlage nach Anspruch 1 gelöst.

Durch die erfindungsgemäße Lösung wird in einem zweistufigen Verfahren der im Kabinenumwälzwasser aufgefangene Wasserlacküberschuß im Rahmen der Vorkonzentrierungsstufe vorzugsweise im Mittel kontinuierlich dem Kabinenumwälzwasserkreislauf entzogen und zum Vorkonzentrat mit einem Festkörpergehalt von beispielsweise 1 bis 10%, vorzugsweise ungefähr 5%, aufkonzentriert, und gleichzeitig wird dieses Vorkonzentrat der Endkonzentrierungsstufe zugeführt, in welcher ein chargenweises Aufkonzentrieren des Vorkonzentrats zum Endkonzentrat erfolgt, wobei das Endkonzentrat eine Festkörperkonzentration aufweist, die für seine Einsetzbarkeit als Recycling-Lack erforderlich ist.

Der große Vorteil der im wesentlichen im Mittel kontinuierlich arbeitenden Vorkonzentrierungsstufe ist darin zu sehen, daß durch die konstante Permeatleistung der Vorkonzentrierungsstufe auch der Festkörpergehalt im Kabinenumwälzwasserkreislauf auf einem im wesentlichen konstanten Wert von beispielsweise 0,1 bis 1,0%, vorzugsweise ungefähr 0,2 bis 0,5%, gehalten werden kann, da die Vorkonzentrierungsstufe mit im wesentlichen konstanten Parametern, nämlich einem im wesentlichen konstanten Festkörpergehalt arbeitet. Die Vorkonzentrierungsstufe erzeugt ferner im wesentlichen kontinuierlich ein Konzentrat, das in der Endkonzentrierungsstufe chargenweise zu dem Endkonzentrat mit einem Festkörpergehalt von beispielsweise 20 bis 50%, vorzugsweise 40 bis 50% bei Füller und Decklack, aufkonzentriert wird. Das chargenweise Aufkonzentrieren hat seinerseits wieder den Vorteil, daß das Endkonzentrat ohne auf die Permeat-Leistung der Endkonzentrierungsstufe achten zu müssen, auf einen Festkörpergehalt aufkonzentriert werden kann, der lediglich an vorteilhaften Lackeigenschaften des Recycling-Lacks ausgerichtet ist.

Um ein chargenweises Arbeiten der Endkonzentrierungsstufe zu ermöglichen, sieht eine vorteilhafte Ausführungsform einer erfindungsgemäßen Rückgewinnungsanlage vor, daß ein Zwischenpufferbehälter vorgesehen ist, welcher das aus der Vorkonzentrierungsstufe abfließende Vorkonzentrat zwischenspeichert und chargenweise der Endkonzentrierungsstufe zuführt. Mit diesem Zwischenpufferbehälter wird somit die Verbindung zwischen der im wesentlichen konstant arbeitenden Vorkonzentrierungsstufe und der Endkonzentrierungsstufe geschaffen, wobei in diesem Zwischenpufferbehälter keine großen Volumina zwischenzupuffern sind, da aufgrund der Vorkonzentrierungsstufe der in den Zwischenpufferbehälter eintretende Volumenstrom einen geringen Teil des in die Vorkonzentrierungsstufe eintretenden Volumenstroms von Kabinenumwälzwasser ausmacht.

Alternativ dazu sieht ein weiteres vorteilhaftes Ausführungsbeispiel einer erfindungsgemäßen Rückgewinnungsanlage vor, daß zwei abwechselnd Vorkonzentrat aufnehmende Endkonzentrierungsstufen vorgesehen sind. Bei diesem Ausführungsbeispiel kann der Zwischenpufferbehälter entfallen, wobei dann die Endkonzentrierungsstufen so arbeiten, daß stets eine mit Vorkonzentrat beladen wird, während die andere die geladene Charge vom Vorkonzentrat zum Endkonzentrat aufkonzentriert.

Im einfachsten Fall ist bei der erfindungsgemäßen Rückgewinnungsanlage vorgesehen, daß das Permeat der Endkonzentrierungsstufe direkt in den Kabinenumwälzwasserkreislauf zurückfließt. Dies kann bei einem lang andauernden Betreiben der erfindungsgemäßen Rückgewinnungsanlage dazu führen, daß niedermolekulare Wasserlackanteile, die noch im Permeat vorhanden sind, in dem Kabinenumwälzwasserkreislauf aufkonzentriert werden, da sie nicht in gleichem Maße wie die Festkörperanteile des Wasserlacks in der Endkonzentrierungsstufe entzogen werden.

Um ein derartiges Aufkonzentrieren von niedermolekularen Wasserlackanteilen zu verhindern, ist vorzugsweise vorgesehen, daß das Permeat der Endkonzentrierungsstufe vor Eintreten in den Kabinenumwälzwasserkreislauf eine niedermolekulare Wasserlackanteile entfernte Umkehrosmosestufe durchläuft.

Mit dieser Umkehrosmosestufe besteht somit die Möglichkeit, auch die im Permeat inbesondere dem Permeat der Endkonzentrierungsstufe, enthaltenen niedermolekularen Wasserlackanteile zu entfernen und das von der Umkehrosmosestufe erzeugte Permeat, welches nunmehr im wesentlichen frei von niedermolekularen Wasserlackanteilen ist, dem Kabinenumwälzwasserkreislauf zuzuführen und somit eine Verdünnung des Kabinenumwälzwassers auch hinsichtlich der niedermolekularen Wasserlackanteile zu erreichen.

Gleichzeitig schafft die Umkehrosmosestufe die Möglichkeit, auch die niedermolekularen Wasserlackanteile wieder zurückzugewinnen, beispielsweise in einer Wasserlackaufbereitungsanlage.

Vorzugsweise ist die Umkehrosmosestufe dabei so ausgebildet, daß sie einen Ringkreislauf und eine Umkehrosmoseeinheit aufweist, welche niedermolekulare Wasserlackanteile im Ringkreislauf aufkonzentriert und ein dem Kabinenumwälzwasserkreislauf zufließendes Osmosepermeat erzeugt.

Vorteilhaft ist es, wenn die Vorkonzentrierungsstufe ständig Kabinenumwälzwasser aus der Abzweigleitung aufnimmt.

Ferner ist es vorteilhaft, wenn das von der Vorkonzentrierungsstufe erzeugte Permeat ständig dem Kabinenumwälzwasserkreislauf zufließt.

Darüber hinaus ist vorteilhafterweise vorgesehen, daß das von der Vorkonzentrierungsstufe erzeugte Vorkonzentrat ständig aus der Vorkonzentrierungsstufe abfließt.

Ein derartiges Abfließen des Vorkonzentrats läßt sich insbesondere vorteilhaft dann erweisen, wenn ein bestimmter Bruchteil des im Ringkreislauf umgewälzten Vorkonzentrats aus der Vorkonzentrierungsstufe abfließt.

Vorzugsweise ist dabei vorgesehen, daß das abfließende Vorkonzentrat ein von der Ultrafiltrationseinheit kommendes Retentat ist.

Eine vorteilhafte Bilanz der Volumenströme ist dann erreicht, wenn der Volumenstrom des abfließenden Vorkonzentrats und des erzeugten Permeats dem Volumenstrom des zur Vorkonzentrierungsstufe fließenden Kabinenumwälzwassers entspricht, so daß die Vorkonzentrierungsstufe ständig Kabinenumwälzwasser mit einem bestimmten Festkörperanteil aus dem Kabinenumwälzwasserkreislauf entnimmt und ständig aber die zum Kreislaufpermeat zuführt und somit zu einer ständigen Verdünnung des Kabinenumwälzwassers beiträgt, das seinerseits aufgrund der Auswaschung des Wasserlacküberschusses in der Spritzkabine stets mit neuem Festkörperanteil, insbesondere Wasserlackpartikeln beladen wird.

Vorzugsweise ist die Leistung der Vorkonzentrierungsstufe so gewählt, daß die über das aus der Vorkonzentrierungsstufe abfließende Vorkonzentrat den Kabinenumwälzwasserkreislauf entzogene Masse von Festkörperanteilen gleich der Masse von Festkörperanteil ist, die über den Wasserlacküberschuß von dem Kabinenumwälzwasserkreislauf ausgewaschen wird

Schließlich wird die erfindungsgemäße Aufgabe durch ein Verfahren nach Anspruch 12 gelöst.

Die Vorteile des erfindungsgemäßen Verfahrens sind dieselben wie die der erfindungsgemäßen Rückgewinnungsanlage, so daß diesbezüglich auf die Ausführungen hierzu verwiesen werden kann.

Besonders vorteilhaft ist es dabei, wenn ein Zwischenpuffer vorgesehen wird, welcher das aus der Vorkonzentrierungsstufe abfließende Vorkonzentrat zwischenspeichert und von welchem ausgehend das Vorkonzentrat chargenweise der Endkonzentrierungsstufe zugeführt wird.

Alternativ dazu ist es bei einem anderen Ausführungsbeispiel des erfindungsgemäßen Verfahrens vorteilhaft, wenn zwei abwechselnd Vorkonzentrat aufnehmende Endkonzentrierungsstufen vorgesehen werden.

Hinsichtlich der Weiterverwendung des Permeats der Endkonzentrierungsstufen besteht einerseits die Möglichkeit, dieses direkt wieder dem Kabinenumwälzwasserkreislauf zurückzuführen. Noch besser ist es jedoch, wenn das Permeat der Endkonzentrierungsstufe vor Eintritt in den Kabinenumwälzwasserkreislauf durch eine niedermolekulare Wasserlackanteile entfernte Umkehrosmosestufe geführt wird.

Zweckmäßigerweise arbeitet dabei die Umkehrosmosestufe so, daß das Permeat durch eine Umkehrosmosestufe geführt wird, in welcher niedermolekulare Wasserlackanteile aufkonzentriert werden und ein dem Kabinenumwälzwasserkreislauf zugeführtes Osmosepermeat erzeugt wird.

Vorzugsweise wird bei den erfindungsgemäßen Ausführungsbeispielen die Vorkonzentrierungsstufe so betrieben, daß ständig Permeat erzeugt und dem Kabinenumwälzwasserkreislauf zugeführt wird.

Ferner läßt sich die Vorkonzentrierungsstufe vorteilhafterweise weiter so betreiben, daß das erzeugte Vorkonzentrat ständig aus der Vorkonzentrierungsstufe entfernt wird.

Dieses Entfernen des Vorkonzentrats erfolgt vorzugsweise dadurch, das stets ein bestimmter Bruchteil des im Ringkreislauf umgewälzten Vorkonzentrats entfernt wird.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:

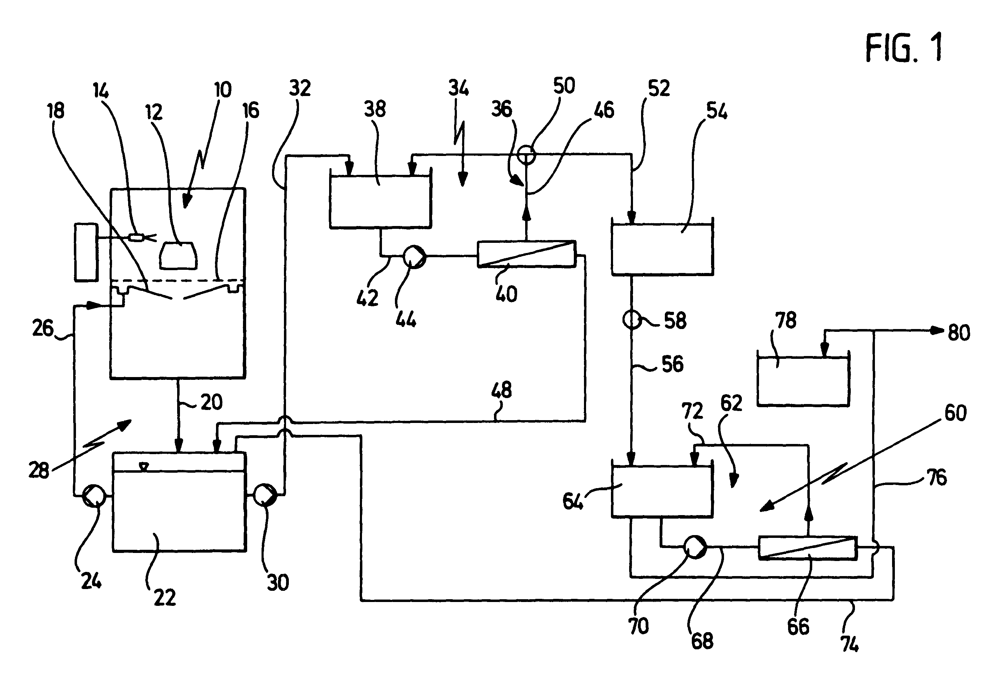

- Fig. 1: eine schematische Darstellung eines ersten Ausführungsbeispiels einer erfindungsgemaßen Rückgewinnungsanlage;

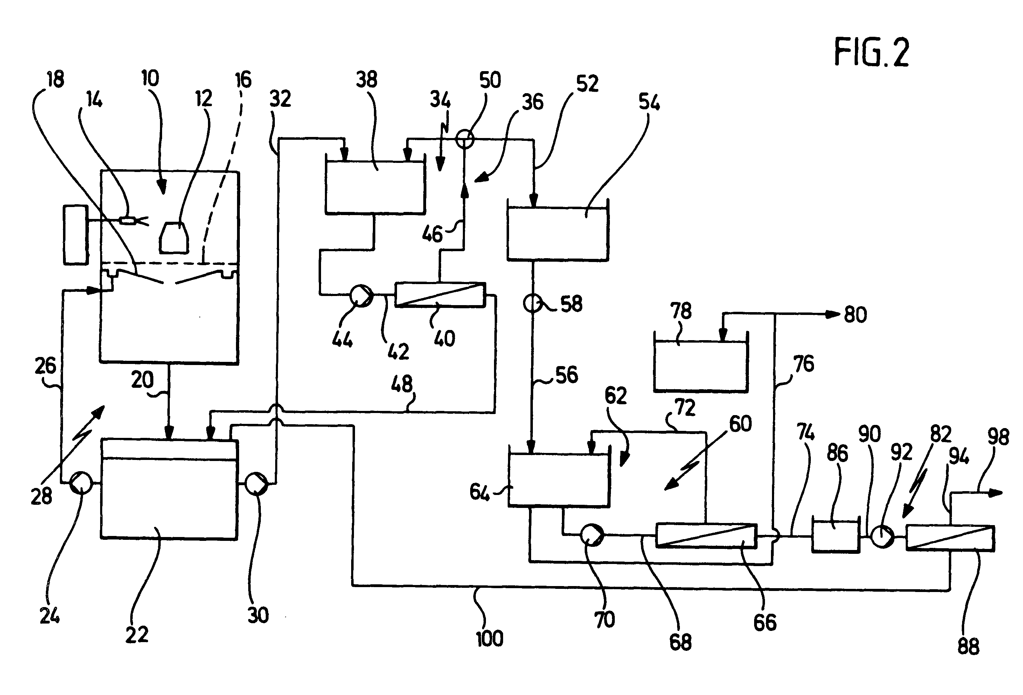

- Fig. 2: eine schematische Darstellung eines zweiten Ausführungsbeispiels und
- Fig. 3: eine schematische Darstellung eines dritten Ausführungsbeispiels einer erfindungsgemäßen Rückgewinnungsanlage.

Ein Ausführungsbeispiel einer erfindungsgemäßen Rückgewinnungsanlage kommt bei einer als Ganzes mit 10 bezeichneten Spritzkabine zum Einsatz, in welcher beispielsweise eine Kraftfahrzeugkarosserie 12 mittels Spritzeinrichtungen mit Wasserlack lackierbar ist. Der nicht auf der Kraftfahrzeugkarosserie 12 verbleibende Wasserlack wird unterhalb eines Gitterbodens 16 als Wasserlacküberschuß von über ein Ablaufblech 18 fließendem Kabinenumwälzwasser ausgewaschen, gesammelt und mitsamt dem Kabinenumwälzwasser über eine Ablaufleitung 20 einem Systemtank 22 zugeführt. Von diesem Systemtank 22 ausgehend wird mittels einer Pumpe 24 über eine Zulaufleitung 26 das Kabinenumwälzwasser wieder Zulaufrinnen der Ablaufbleche 18 zugeführt, so daß insgesamt das Kabinenumwälzwasser in einem Kabinenumwälzwasserkreislauf 28 umfäuft, um stets den Wasserlacküberschuß aus der Spritzkabine 10 auszuwaschen.

Damit steigt in dem Kabinenumwälzwasserkreislauf 28 die Konzentration des Festkörperanteils stetig an, die einen bestimmten Wert allerdings nicht überschreiten soll, um ein Sedimentieren des dispergierten Wasserlacks in kritischen Teilen des Kabinenumwälzwasserkreislaufs zu verhindern.

Aus diesem Grund wird mittels einer Pumpe 30 über eine Abzweigleitung 32 ein Volumenstrom von Kabinenumwälzwasser aus dem Kabinenumwälzwasserkreislauf 28 abgezweigt und einer als Ganzes mit 34 bezeichneten Vorkonzentrierungsstufe zugeführt. Diese Vorkonzentrierungsstufe 34 umfaßt einen mit 36 bezeichneten Ringkreislauf mit einem Kreislaufbehälter 38 einer vom Kreislaufbehälter 38 zu einer Ultrafiltrationseinheit 40 führenden Filterzuleitung 42 und einer in der Filterzuleitung angeordneten Pumpe 44 eine von der Ultrafiltrationseinheit 40 zum Kreislaufbehälter zurückführende Retentatleitung 46. Ferner führt von der Ultrafiltrationseinheit 40 noch eine Permeat-Leitung 48 weg und in den Systemtank 22 zurück.

Bei der erfindungsgemäßen Vorkonzentrierungsstufe 34 mündet die Abzweigleitung 32 in den Kreislaufbehälter 38 des Ringkreisfaufs 36.

In der Permeatleitung 48 ist ferner noch ein Abzweigventil 50 vorgesehen, welches vorzugsweise als Proportionalventil ausgebildet ist, einen einstellbaren Anteil des Volumenstroms in der Retentatleitung 46 abzweigt und über eine Vorkonzentratleitung 52 in einen Zwischenpufferbehälter 54 einleitet.

Von dem Zwischenpufferbehälter 54 führt eine Beladeleitung 56 mit einem darin angeordneten Absperrventil 58 zu einer Endkonzentrierungsstufe 60, welche ebenfalls einen Ringkreislauf 62 mit einem Kreislaufbehälter 64, einer zu einer Ultrafiltrationseinheit 66 führenden Filterzuleitung 68 mit einer Pumpe 70 aufweist und eine von der Ultrafiltrationseinheit 66 zum Kreislaufbehälter 64 zurückführende Retentatleitung 72.

Das in der Ultrafiltrationseinheit 66 erzeugte Permeat wird wiederum über eine Permeatleitung 74 direkt dem Systemtank 22 zugeführt.

Zum Entleeren des Kreislaufbehälters 64 ist ferner noch eine Entleerungsleitung 76 vorgesehen, welche entweder zu einem Lackpuffertank 78 oder zu einer Lackaufbereitungseinrichtung 80 führt.

Die erfindungsgemäße Rückgewinnungsanlage für Wasserlacküberschuß arbeitet nun folgendermaßen:

Zunächst ist davon auszugehen, daß in dem Kabinenumwälzwasserkreislauf 28 das KabinenumwäJzwasser stets neuen Wasserlacküberschuß aus der Spritzkabine 10 auswäscht und aufnimmt. Dies führt zu einem Ansteigen des Festkörpergehalts in dem gesamten Kabinenumwälzwasserkreislauf 28, auf Werte von ungefähr 0,1 bis 1%, vorzugsweise 0,2 bis 0,5%.

Um diese Festkörperkonzentration im Systemtank 22, die nicht gemessen werden kann, im wesentlichen konstant zu halten, arbeitet die Vorkonzentrierungsstufe 34 ständig, das heißt daß in dem Ringkreislauf 36 stets das über die Pumpe 30 und die Abzweigleitung 32 diesem zugeführte Kabinenumwälzwasser mit Wasserlackpartikeln aufkonzentriert wird, um in dem Ringkreislauf 36 ein Vorkonzentrat herzustellen, das beispielsweise einen Festkörpergehalt von 1 bis 10%, vorzugsweise ungefähr 5% aufweist. Durch das ständig in dem Ringkreislauf 36 umgewälzte Kabinenumwälzwasser mit Wasserlackpartikeln trennt die Ultrafiltrationseinheit ständig Permeat ab und führt dieses über die Permeatleitung 48 zurück in den Systemtank 22. Darüber hinaus wirkt das Abzweigventil 50 - wie bereits beschrieben - so, daß stets ein bestimmter Anteil des Volumenstroms in der Retentatleitung 46 abgezweigt wird und über die Vorkonzentratleitung 52 in den Zwischenpufferbehälter 54 fließt. Der Anteil beträgt beispielsweise 1/20 des Volumenstroms in der Retentatleitung 46 des Ringkreislaufs 36.

Um das Volumen des umgewälzten Kabinenumwälzwassers mit Lackpartikeln im Ringkreislauf 36 konstant zu halten, wird stets der Volumenstrom des über die Permeatleitung 48 abfließenden Permeats sowie der Volumenstrom des über die Vorkonzentratleitung 52 abfließenden Vorkonzentrats durch über die Pumpe 30 und die Abzweigleitung 32 zugeführtes Kabinenumwälzwasser mit Wasserlackpartikeln bei vorzugsweise einem Festkörpergehalt von 0,2 bis 0,5% ersetzt.

Der Volumenstrom durch die Abzweigleitung 32 ist beispielsweise entsprechend dem Füllstand im Kreislaufbehälter 38 steuerbar.

Damit dient die erste Vorkonzentrierungsstufe 34 dazu, kontinuierlich dem Kabinenumwälzwasserkreislauf 28 einen Volumenstrom von Kabinenumwälzwasser mit Wasserlackpartikeln zu entziehen und diesen Volumenstrom im wesentlichen durch das über die Permeatleitung 48 zurückgeführte Permeat zu ersetzen, so daß hierdurch wiederum eine stetige Verdünnung des gesamten Kabinenumwälzwassers erfolgt und somit der über der Kabinenumwälzwasserkreislauf 28 eingetragene Festkörperanteil im Prinzip über den Volumenstrom durch die Abzweigleitung 32 abgeführt wird.

Das von der Vorkonzentratleitung 52 in den Zwischenpufferbehälter 54 eingeleitete Vorkonzentrat wird nun in diesem zwischengespeichert und mittels des Absperrventils 58 in der Beladeleitung chargenweise dem Kreislaufbehälter 64 des Ringkreislaufs 62 der Endkonzentrationsstufe 60 durchgeführt, das heißt der Endkreislauf 62 wird in konstanten Zeitabständen mit jeweils einer erneuten Charge von Vorkonzentrat beladen.

Bei einmal beladenem Ringkreislauf 62 wird das Vorkonzentrat in diesem Ringkreislauf 62 stets umgewälzt und passiert somit ständig die Ultrafiltrationseinheit 66, die aus dem umgewälzten Vorkonzentrat ständig Permeat abscheidet und über die Permeatleitung 74 wiederum dem Systemtank 22 zuführt.

Damit setzt in dem Ringkreislauf 62 eine Aufkonzentrierung des Vorkonzentrats ein und zwar bis zu einem Festkörpergehalt von ungefähr 20 bis ungefähr 50% je nach Lacksorte im Endkonzentrat. Ist diese Festkörperkonzentration erreicht und somit das Endkonzentrat hergestellt, so erfolgt über die Entleerungleitung 76 ein Entleeren des Kreislaufbehälters 64 und auch des Ringkreislaufs 62 entweder in den Lackpufferbehälter 78 oder direkt in die Lackaufbereitungseinrichtung 80.

Der nunmehr entleerte Kreislaufbehälter 64 wird anschließend erneut über die Beladeleitung 56 mit einer weiteren Charge von Vorkonzentrat beladen, die ebenfalls dann wiederum in dem Ringkreislauf 62 zu Endkonzentrat aufkonzentriert wird.

Bei einem zweiten Ausführungsbeispiel einer erfindungsgemäßen Rückgewinnungsanlage für Wasserlacküberschuß sind diejenigen Teile, die mit denen des ersten Ausführungsbeispiels identisch sind mit denselben Bezugszeichen versehen. Hinsichtlich der Beschreibung von deren Anordnung und deren Funktion wird auf die Ausführungen zum ersten Ausführungsbeispiel Bezug genommen.

Im Gegensatz zum ersten Ausführungsbeispiel führt die Permeatleitung 74 nicht direkt zurück zum Systemtank sondern über eine Umkehrosmosestufe 82, welche einen Arbeitstank 86, eine Umkehrosmoseeinheit 88, eine vom Arbeitstank 86 zu der Umkehrosmoseeinheit 88 führenden Zuleitung 90 mit einer Pumpe 92 und eine von der Umkehrosmoseeinheit 88 wegführenden Retentatleitung 94 aufweist. Ferner führt die Retentatleitung 94 über eine Ableitung 98 beispielsweise in einen Speicherbehälter oder in die Lackaufbereitungseinrichtung 80. Außerdem führt von der Umkehrosmoseeinheit 88 eine Osmosepermeatleitung 100 zurück zum Systemtank 22.

Im Gegensatz zum ersten Ausführungsbeispiel wird bei dem zweiten Ausführungsbeispiel nicht das Permeat der Ultrafiltrationseinheit 66 direkt über die Permeatleitung 74 in den Systemtank geführt, sondern in die Umkehrosmosestufe 82. In dieser wird das Permeat im Ringkreislauf 84 umgewälzt und durch die Umkehrosmoseeinheit 88 werden noch im Permeat vorhandene niedermolekulare Lackanteile, wie beispielsweise niedermolekulare Bindemittel und niedermolekulare Lösemittel, zurückgehalten und in der Retentatleitung 94 umgewälzt, während das Wasser über die Osmosepermeatleitung 100 zum Systemtank 22 zurückfließt.

In der im Ringkreislauf 84 der Umkehrosmosestufe 82 werden somit die niedermolekularen Wasserlackanteile aufkonzentriert und über die Ableitung 98 einer Wiederverwertung, sei es direkt in der Lackaufbereitungseinrichtung 80 oder durch Zwischenspeicherung in einem Behälter, zugeführt.

Ferner wird durch die Umkehrosmosestufe 82 vermieden, daß die Konzentration der niedermolekularen Wasserlackanteile in dem Kabinenumwälzwasserkreislauf 28 im Lauf der Zeit ansteigt und somit der Festkörperanteil, also der Anteil von Wasserlackpartikeln, in dem Kabinenumwälzwasserkreislauf nicht in ausreichendem Umfang in der Schwebe gehalten werden kann.

Durch das über die Osmosepermeatleitung 100 zurückfließende reine Wasser wird somit in dem Kabinenumwälzwasserkreislauf auch eine stetige Verdünnung hinsichtlich der niedermolekularen Wasserlackanteile herbeigeführt.

Vorzugsweise arbeiten beim ersten und beim zweiten Ausführungsbeispiel die Ultrafiltrationseinheiten 40 und 66 mit Membranen, welche eine Trenngrenze im Bereich von ungefähr 10.000 bis ungefähr 100.000 Dalton aufweisen, während die Umkehrosmoseeinheit 88 mit einer Membran arbeitet, deren Trenngrenze im Bereich von ungefähr 100 Dalton bis ungefähr 200 Dalton liegt.

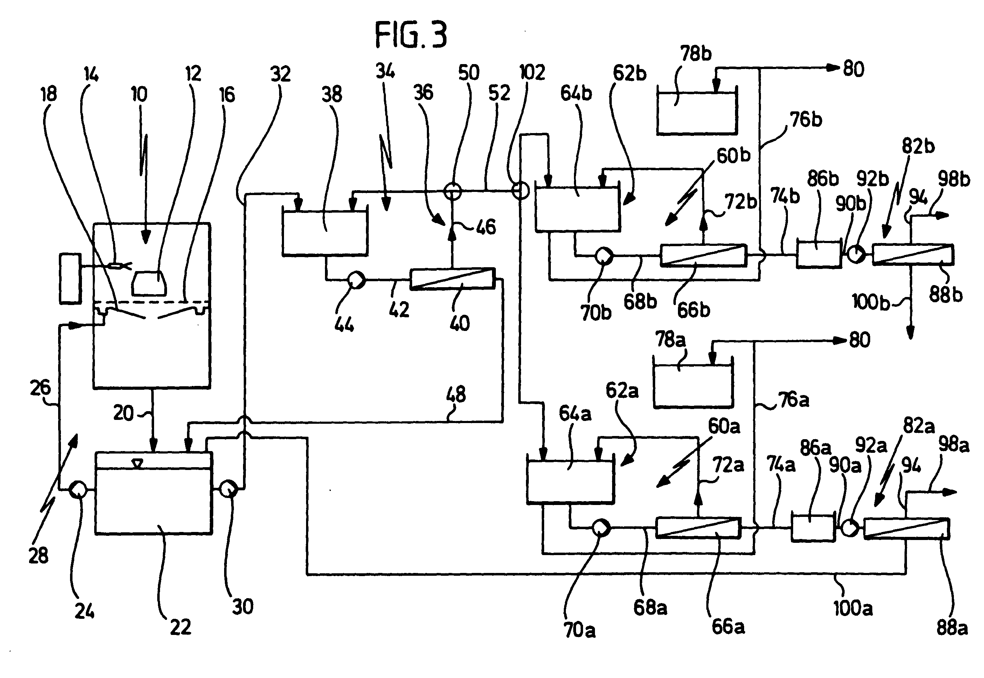

Bei einem dritten Ausführungsbeispiel einer erfindungsgemäßen Rückgewinnungsanlage, dargestellt in Fig. 3, sind diejenigen Teile, die mit denen des ersten und zweiten Ausführungsbeispiels versehen sind, mit denselben Bezugszeichen versehen, so daß bezüglich deren Anordnung und Funktion auf die Ausführungen zu den ersten beiden Ausführungsbeispiele verwiesen werden kann.

Im Gegensatz zum ersten und zweiten Ausführungsbeispiel sind zwei Endkonzentrierungsstufen 60a und 60b vorgesehen, die in gleicher Weise wie die Endkonzentrierungsstufe 60 arbeiten und zusätzlich ist jeder der Endkonzentrierungsstufen 60a und 60b noch eine Umkehrosmosestufe 82a bzw. 82b nachgeschaltet.

Der Vorteil des dritten Ausführungsbeispiels ist darin zu sehen, daß der Zwischenpufferbehälter 54 entfallen kann.

Anstelle des Zwischenpufferbehälters 54 ist in der Vorkonzentratleitung 52 ein Umschaltventil 102 angeordnet, welches das Vorkonzentrat entweder in den Kreislaufbehälter 64a oder 64b einleitet.

Die beiden Endkonzentrierungsstufen 60a und 60b arbeiten nun so, daß entweder die Endkonzentrierungsstufe 60a oder 60b beladen wird und die jeweils andere 60b bzw. 60a die beladene Charge auf das Endkonzentrat aufkonzentriert.

Damit wird das Vorkonzentrat stets von einer der Endkonzentrierungsstufen 60a oder 60b abgenommen.

Die Osmosepermeatleitungen 100a und 100b sind dabei vorzugsweise ebenfalls wieder in den Systemtank 22 zurückgeführt, so daß - wie bereits beschrieben - das Kabinenumwälzwasser stets in ausreichendem Maße verdünnt wird und keine Aufkonzentrierung von niedermolekularen Wasserlackanteilen in diesem erfolgt.

## Patentansprüche

1. Rückgewinnungsanlage für Lacküberschuß in Lackspritzkabinen (10), umfassend einen Kabinenumwälzwasserkreislauf (28) und eine Vorkonzentrierungsstufe (34), zu welcher von dem Kabinenumwälzwasserkreislauf (28) über eine Abzweigleitung (32) ein Volumenstrom von Kabinenumwälzwasser fließt, wobei die Vorkonzentrierungsstufe (34) einen Ringkreislauf (36) mit einer Ultrafiltrationseinheit (40) aufweist, welche ständig im Ringkreislauf (36) ein Vorkonzentrat und ein den Ringkreislauf (36) verlassendes Permeat erzeugt, welches dem Kabinenumwälzwasserkreislauf (28) zufließt,
**dadurch gekennzeichnet,**
**daß** der Ringkreislauf (36) der Vorkonzentrierungsstufe (34) einen Kreislaufbehälter (38) umfaßt, in den die Abzweigleitung (32) mündet,
**daß** zur Rückgewinnung von Wasserlacküberschuß das Vorkonzentrat einer Endkonzentrierungsstufe (60) zufließt und daß die Endkonzentrierungsstufe (60) einen Ringkreislauf (62) mit einer weiteren Ultrafiltrationseinheit (66) aufweist, welche das Vorkonzentrat chargenweise zum Endkonzentrat aufkonzentriert und ein Permeat erzeugt, welches dem Kabinenumwälzwasserkreislauf (28) zufließt.

2. Rückgewinnungsanlage nach Anspruch 1, **dadurch gekennzeichnet, daß** ein Zwischenpufferbehälter (54) vorgesehen ist, welcher das aus der Vorkonzentrierungsstufe (34) abfließende Vorkonzentrat zwischenspeichert und chargenweise der Endkonzentrierungsstufe zuführt.

3. Rückgewinnungsanlage nach Anspruch 1, **dadurch gekennzeichnet, daß** zwei abwechselnd Vorkonzentrat aufnehmende Endkonzentrierungsstufen (60a, 60b) vorgesehen sind.

4. Rückgewinnungsanlage nach einem der voranstehenden Ansprüche, **dadurch gekennzeichnet, daß** das Permeat der Endkonzentrierungsstufe (60) direkt in den Kabinenumwälzwasserkreislauf (28) zurückfließt.

5. Rückgewinnungsanlage nach einem der Ansprüche 1 bis 3, **dadurch gekennzeichnet, daß** das Permeat der Endkonzentrierungsstufe (60) vor Eintreten in den Kabinenumwälzwasserkreislauf (28) eine niedermolekulare Wasserlackanteile entfernende Umkehrosmosestufe (82) durchläuft.

6. Rückgewinnungsanlage nach Anspruch 5, **dadurch gekennzeichnet, daß** die Umkehrosmosestufe (82) einen Ringkreislauf (84) und eine Umkehrosmoseeinheit (88) aufweist, welche niedermolekulare Wasserlackanteile aufkonzentriert und ein dem Kabinenumwälzwasserkreislauf (28) zufließendes Osmosepermeat erzeugt.

7. Rückgewinnungsanlage nach einem der voranstehenden Ansprüche, **dadurch gekennzeichnet, daß** die Vorkonzentrierungsstufe (34) zur Aufnahme von Kabinenumwälzwasser mit der Abzweigleitung (32) ständig verbunden ist.

8. Rückgewinnungsanlage nach einem der voranstehenden Ansprüche, **dadurch gekennzeichnet, daß** das von der Vorkonzentrierungsstufe (34) erzeugte Permeat ständig dem Kabinenumwälzwasserkreislauf (28) über eine Permeatleitung (48) zufließt.

9. Rückgewinnungsanlage nach einem der voranstehenden Ansprüche, **dadurch gekennzeichnet, daß** das von der Vorkonzentrierungsstufe (34) erzeugte Vorkonzentrat ständig über eine Vorkonzentratleitung (52) aus der Vorkonzentrierungsstufe (34) abfließt.

10. Rückgewinnungsanlage nach Anspruch 9, **dadurch gekennzeichnet, daß** der Ringkreislauf (36) mit einem Abzweigventil (50) versehen ist, durch welches ein bestimmter Bruchteil des im Ringkreislauf (36) umgewälzten Vorkonzentrats aus der Vorkonzentrierungsstufe (34) über die Vorkonzentratleitung (52) abfließt.

11. Rückgewinnungsanlage nach Anspruch 10, **dadurch gekennzeichnet, daß** das über das Abzweigventil (50) abfließende Vorkonzentrat ein von der Ultrafiltrationseinheit (40) kommendes Retentat ist.

12. Verfahren zur Rückgewinnung von Lacküberschuß in Lackspritzkabinen (10), in welchen Kabinenumwälzwasser im Kreislauf (28) geführt ist, wobei von dem Kabinenumwälzwasserkreislauf (28) ein Volumenstrom von Kabinenumwälzwasser zu einer Vorkonzentrierungsstufe (34) geführt wird, die Vorkonzentrierungsstufe (34) einen Ringkreislauf (36) mit eine Ultrafiltrationseinheit (40) aufweist, in welcher ständig im Ringkreislauf (36) ein Vorkonzentrat und ein den Ringkreislauf (36) verlassendes Permeat erzeugt wird, und wobei das Permeat dem Kabinenumwälzwasserkreislauf (28) zugeführt wird, **dadurch gekennzeichnet, daß** der Volumenstrom von Kabinenumwälzwasser der Vorkonzentrierungsstufe (34) über eine Abzweigleitung (32) zugeführt wird, die in einen Kreislaufbehälter (38) des Ringkreislaufs (36) der Vorkonzentrierungsstufe (34) mündet, daß zur Rückgewinnung von Wasserlacküberschuß das Vorkonzentrat einer Endkonzentrierungsstufe (60) zugeführt wird und daß die Endkonzentrierungsstufe (60) einen Ringkreislauf (62) mit einer weiteren Ultrafiltrationseinheit (66) aufweist, in welcher das Vorkonzentrat chargenweise zum Endkonzentrat aufkonzentriert und ein Permeat erzeugt wird, welches dem Kabinenumwälzwasserkreislauf (28) zugeführt wird.

13. Verfahren nach Anspruch 12, **dadurch gekennzeichnet, daß** das aus der Vorkonzentrierungsstufe (34) abfließende Vorkonzentrat zwischengespeichert und chargenweise der Endkonzentrierungsstufe (60) zugeführt wird.

14. Verfahren nach Anspruch 12, **dadurch gekennzeichnet, daß** das Vorkonzentrat abwechselnd zwei dieses aufnehmenden Endkonzentrierungsstufen (60a, 60b) zugeführt wird.

15. Verfahren nach einem der Ansprüche 12 bis 14, **dadurch gekennzeichnet, daß** das Permeat der Endkonzentrierungsstufe (60) direkt in den Kabinenumwälzwasserkreislauf (28) zurückgeführt wird.

16. Verfahren nach einem der Ansprüche 12 bis 14, **dadurch gekennzeichnet, daß** das Permeat der Endkonzentrierungsstufe (60) vor Eintritt in den Kabinenumwälzwasserkreislauf (28) durch eine niedermolekulare Wasserlackanteile entfernende Umkehrosmosestufe (88) geführt wird.

17. Verfahren nach Anspruch 16, **dadurch gekennzeichnet, daß** in der Umkehrosmosestufe (88) niedermolekulare Wasserlackanteile aufkonzentriert werden und daß ein dem Kabinenumwälzwasserkreislauf (28) zugeführtes Osmosepermeat erzeugt wird.

## Claims

1. A recovery plant for surplus paint in paint-spraying booths (10), comprising a booth water circuit (28) and a pre-concentration stage (34) to which a volume flow of booth water flows from the booth water circuit (28) *via* a branch pipe (32), the pre-concentration stage (34) comprising a ring circuit (36) with an ultrafiltration unit (40) which continuously produces in the ring circuit (36) a pre-concentrate and a permeate which leaves the ring circuit (36) and flows into the booth water circuit (28), **characterized in that** the ring circuit (36) of the pre-concentration stage (34) comprises a circuit tank (38) into which the branch pipe (32) opens, in order to recover surplus water paint the pre-concentrate flows into a final concentration stage (60), and the final concentration stage (60) comprises a ring circuit (62) with a further ultrafiltration unit (66) which increases the concentration of the pre-concentrate in batches to the final concentrate and produces a permeate which flows into the booth water circuit (28).

2. A recovery plant according to Claim 1, **characterized in that** an intermediate buffer tank (54) is provided which temporarily stores the pre-concentrate flowing off from the pre-concentration stage (34) and feeds it in batches to the final concentration stage.

3. A recovery plant according to Claim 1, **characterized in that** two final concentration stages (60a, 60b) are provided for alternately receiving pre-concentrate.

4. A recovery plant according to one of the preceding Claims, **characterized in that** the permeate of the final concentration stage (60) flows back directly into the booth water circuit (28).

5. A recovery plant according to one of Claims 1 to 3, **characterized in that** the permeate of the final concentration stage (60) passes through a reverse-osmosis stage (82) for removing low-molecular water paint components before entering the booth water circuit (28).

6. A recovery plant according to Claim 5, **characterized in that** the reverse-osmosis stage (82) comprises a ring circuit (84) and a reverse-osmosis unit (88) which increases the concentration of low-molecular water paint components and produces an osmosis permeate which flows into the booth water circuit (28).

7. A recovery plant according to one of the preceding Claims, **characterized in that** the pre-concentration stage (34) is constantly connected to the branch pipe (32) in order to take in booth water.

8. A recovery plant according to one of the preceding Claims, **characterized in that** the permeate produced by pre-concentration stage (34) flows continuously into the booth water circuit (28) *via* a permeate pipe (48).

9. A recovery plant according to one of the preceding Claims, **characterized in that** the pre-concentrate produced by the pre-concentration stage (34) flows off continuously from the pre-concentration stage (34) *via* a pre-concentrate pipe (52).

10. A recovery plant according to Claim 9, **characterized in that** the ring circuit (36) is provided with a branch-off valve (50) through which a certain fraction of the pre-concentrate circulated in the ring circuit (36) flows off from the pre-concentration stage (34) *via* the pre-concentrate pipe (52).

11. A recovery plant according to Claim 10, **characterized in that** the pre-concentrate which flows off *via* the branch-off valve (50) is retained matter coming from the ultrafiltration unit (40).

12. A method for the recovery of surplus paint in paint-spraying booths (10) in which booth water is circulated in a circuit (28), wherein a volume flow of booth water is conducted from the booth water circuit (28) to a pre-concentration stage (34), the pre-concentration stage (34) comprises a ring circuit (36) with an ultrafiltration unit (40) in which there are continuously produced in the ring circuit (36) a pre-concentrate and a permeate which leaves the ring circuit (36), and wherein the permeate is fed to the booth water circuit (28), **characterized in that** the volume flow of booth water is fed to the pre-concentration stage (34) *via* a branch pipe (32) which opens into a circuit tank (38) of the ring circuit (36) of the pre-concentration stage (34), in order to recover surplus water paint the pre-concentrate is fed to a final concentration stage (60), and the final concentration stage (60) comprises a ring circuit (62) with a further ultrafiltration unit (66) in which the concentration of the pre-concentrate is increased in batches to the final concentrate and a permeate is produced which is fed to the booth water circuit (28).

13. A method according to Claim 12, **characterized in that** the pre-concentrate flowing off from the pre-concentration stage (34) is temporarily stored and fed in batches to the final concentration stage (60).

14. A method according to Claim 12, **characterized in that** the pre-concentrate is alternately fed to two final concentration stages (60a, 60b) which receive it.

15. A method according to one of Claims 12 to 14, **characterized in that** the permeate of the final concentration stage (60) is fed back directly into the booth water circuit (28).

16. A method according to one of Claims 12 to 14, **characterized in that** the permeate of the final concentration stage (60) is conducted through a reverse-osmosis stage (88) for removing low-molecular water paint components before entering the booth water circuit (28).

17. A method according to Claim 16, **characterized in that** the concentration of low-molecular water paint components is increased in the reverse-osmosis stage (88), and an osmosis permeate is produced which is fed to the booth water circuit (28).

## Revendications

1. Installation de récupération d'excédent de peinture dans des cabines de pulvérisation de peinture (10) comprenant un circuit d'eau de circulation de cabine (28) et un étage de préconcentration (34) vers lequel un courant volumique d'eau de circulation de cabine s'écoule du circuit d'eau de circulation de cabine (28) par l'intermédiaire d'un conduit de dérivation (32), l'étage de préconcentration (34) présentant un circuit en boucle (36) avec une unité d'ultrafiltration (40) qui produit de manière constante dans le circuit en boucle (36) un produit de préconcentration et un produit de perméation qui quitte le circuit en boucle (36) et qui s'écoule vers le circuit d'eau de circulation de cabine (28), **caractérisée en ce que** le circuit en boucle (36) de l'étage de préconcentration (34) comprend un réservoir de circuit (38) dans lequel débouche le conduit de dérivation (32), **en ce que**, pour la récupération d'excédent de peinture à base aqueuse, le produit de préconcentration s'écoule vers un étage de concentration finale (60), et **en ce que** l'étage de concentration finale (60) présente un circuit en boucle (62) avec une unité d'ultrafiltration supplémentaire (66) qui concentre le produit de préconcentration, par charge, en le produit de concentration finale et qui produit un produit de perméation qui s'écoule vers le circuit d'eau de circulation de cabine (28).

2. Installation de récupération suivant la revendication 1, **caractérisée en ce qu'**il est prévu un réservoir tampon intermédiaire (54) qui accumule de manière intermédiaire le produit de préconcentration évacué à partir de l'étage de préconcentration (34) et qui l'amène par charge à l'étage de concentration finale.

3. Installation de récupération suivant la revendication 1, **caractérisée en ce que** deux étages de concentration finale (60a, 60b) recevant en alternance du produit de préconcentration sont prévus.

4. Installation de récupération suivant l'une des revendications précédentes, **caractérisée en ce que** le produit de perméation de l'étage de concentration finale (60) revient directement dans le circuit d'eau de circulation de cabine (28).

5. Installation de récupération suivant l'une des revendications 1 à 3, **caractérisée en ce que** le produit de perméation de l'étage de concentration finale (60) passe, avant de pénétrer dans le circuit d'eau de circulation de cabine (28), à travers un étage d'osmose inverse (82) qui élimine des fractions de peinture à base aqueuse de faible poids moléculaire.

6. Installation de récupération suivant la revendications 5, **caractérisée en ce que** l'étage d'osmose inverse (82) présente un circuit en boucle (84) et une unité d'osmose inverse (88) qui concentre des fractions de peinture à base aqueuse de faible poids moléculaire et produit un produit de perméation par osmose qui s'écoule vers le circuit d'eau de circulation de cabine (28).

7. Installation de récupération suivant l'une des revendications précédentes, **caractérisée en ce que** l'étage de préconcentration (34) destiné à recevoir de l'eau de circulation de cabine est en communication constante avec le conduit de dérivation (32).

8. Installation de récupération suivant l'une des revendications précédentes, **caractérisée en ce que** le produit de perméation produit par l'étage de préconcentration (34) s'écoule de manière constante vers le circuit d'eau de circulation de cabine (28) par l'intermédiaire d'un conduit à produit de perméation (48) .

9. Installation de récupération suivant l'une des revendications précédentes, **caractérisée en ce** le produit de préconcentration produit par l'étage de préconcentration (34) est évacué de manière constante de l'étage de préconcentration (34) par l'intermédiaire d'un conduit à produit de préconcentration (52).

10. Installation de récupération suivant la revendication 9, **caractérisée en ce que** le circuit en boucle (36) est pourvu d'une vanne de branchement (50) par laquelle un fraction déterminée du produit de préconcentration amené en circulation dans le circuit en boucle (36) est évacuée de l'étage de préconcentration (34) par l'intermédiaire du conduit à produit de préconcentration (52).

11. Installation de récupération suivant la revendication 10, **caractérisée en ce que** le produit de préconcentration évacué par l'intermédiaire de la vanne de branchement (50) est un produit de rétention provenant de l'unité d'ultrafiltration (40).

12. Procédé de récupération d'excédent de peinture dans des cabines de pulvérisation de peinture (10), dans lesquelles de l'eau de circulation de cabine est guidée dans un circuit (28), un courant volumique d'eau de circulation de cabine provenant du circuit d'eau de circulation de cabine (28) étant guidé vers un étage de préconcentration (34), l'étage de préconcentration (34) présente un circuit en boucle (36) avec une unité d'ultrafiltration (40) où sont produits d'une manière constante dans le circuit en boucle (36) un produit de préconcentration et un produit de perméation quittant le circuit en boucle (36), le produit de perméation étant amené au circuit d'eau de circulation de cabine (28), **caractérisé en ce que** le courant volumique d'eau de circulation de cabine est amené à l'étage de préconcentration (34) par l'intermédiaire d'un conduit de dérivation (32) qui débouche dans un réservoir de circuit (38) du circuit en boucle (36) de l'étage de préconcentration (34), **en ce que**, pour récupérer un excédent de peinture à base aqueuse, le produit de préconcentration est amené à un étage de concentration finale (60) et **en ce que** l'étage de concentration finale (60) présente un circuit en boucle (62) avec une unité d'ultrafiltration supplémentaire (66) dans laquelle le produit de préconcentration est concentré, par charge, en le produit de concentration finale et un produit de perméation est produit qui est amené au circuit d'eau de circulation de cabine (28).

13. Procédé suivant la revendication 12, **caractérisé en ce que** le produit de préconcentration, évacué de l'étage de préconcentration (34), est accumulé de manière intermédiaire et est amené, par charge, à l'étage de concentration finale (60).

14. Procédé suivant la revendication 12, **caractérisé en ce que** le produit de préconcentration est amené en alternance à deux étages de concentration finale (60a, 60b) recevant ce dernier.

15. Procédé suivant l'une des revendications 12 à 14, **caractérisé en ce que** le produit de perméation de l'étage de concentration finale (60) est ramené directement dans le circuit d'eau de circulation de cabine (28).

16. Procédé suivant l'une des revendications 12 à 14, **caractérisé en ce que** le produit de perméation de l'étage de concentration finale (60) est, avant la pénétration dans le circuit d'eau de circulation de cabine (28), guidé à travers un étage d'osmose inverse (88) qui élimine des fractions de peinture à base aqueuse de faible poids moléculaire.

17. Procédé suivant la revendication 16, **caractérisé en ce que**, dans l'étage d'osmose inverse (88), des fractions de peinture à base aqueuse de faible poids moléculaire sont concentrées et **en ce qu'**un produit de perméation par osmose, amené au circuit d'eau de circulation de cabine (28), est produit.
